# EUROPEAN PATENT APPLICATION

(11) **EP 1 977 924 A1**
(43) Date of publication of application: **08.10.2008**
(21) Application number: 07707197.5
(22) Date of filing: 23.01.2007
(51) Int. Cl.: B60K 7/00, B60G 13/16, F16F 15/02, H02K 7/14

(54) **IN-WHEEL MOTOR SYSTEM**

(30) Priority: 23.01.2006 JP 2006013863
(71) Applicant: Kabushiki Kaisha Bridgestone, Chuo-ku, Tokyo 104-8340 (JP)
(72) Inventor: IWANO, Haruo, KABUSHIKI KAISHA BRIDGESTONE TECHNICAL CENTER, Kodaira-shi Tokyo 1878531 (JP)
(74) Representative: Whalley, Kevin
(86) International application number: PCT/JP2007/050934
(87) International publication number: WO 2007/083800

(57) **Abstract**

A geared motor 10G, which is provided with an electric motor 10 and a reduction gear mechanism 11 for reducing the rotation speed thereof and transmitting the reduced speed to a wheel 2, is elastically connected to a knuckle 5 by a dynamic vibration absorber 20 which comprises a motor mounting member 21 attached to a lateral side of a motor case 10a, a knuckle mounting member 22?? attached to the knuckle 5, a spring member 23 interconnecting the motor mounting member 21 and the knuckle mounting member 22??, two guide members 24,24 for guiding the operation of the spring member 23 in the up-and-down direction, and a damper 25?? disposed in parallel with the guide members 24,24. Also, the electric motor 10 and the dynamic vibration absorber 20 are disposed posterior to the reduction gear mechanism 11. As a result, the geared motor 10G is provided with an ample stroke width, and also the dynamic vibration absorber 20 can perform its expected function fully.

## Description

### TECHNICAL FIELD

The present invention relates to an in-wheel motor system with a motor mounted to an unsprung member of a vehicle through the medium of a dynamic vibration absorber such that the mass of the motor is used as the mass of the dynamic vibration absorber.

### BACKGROUND ART

In recent years, in-wheel motor systems with a motor incorporated in a wheel are increasingly making their way into motor-driven vehicles such as electric cars.
Particularly, attention is being paid to a type of in-wheel motor systems featuring excellent riding comfort and road holding properties of a vehicle, which are realized by elastically supporting the motor through a dynamic vibration absorber with respect to parts around a wheel. Such structural arrangement allows the mass of the motor to act as the mass of a dynamic damper (see References 1 to 3, for instance).

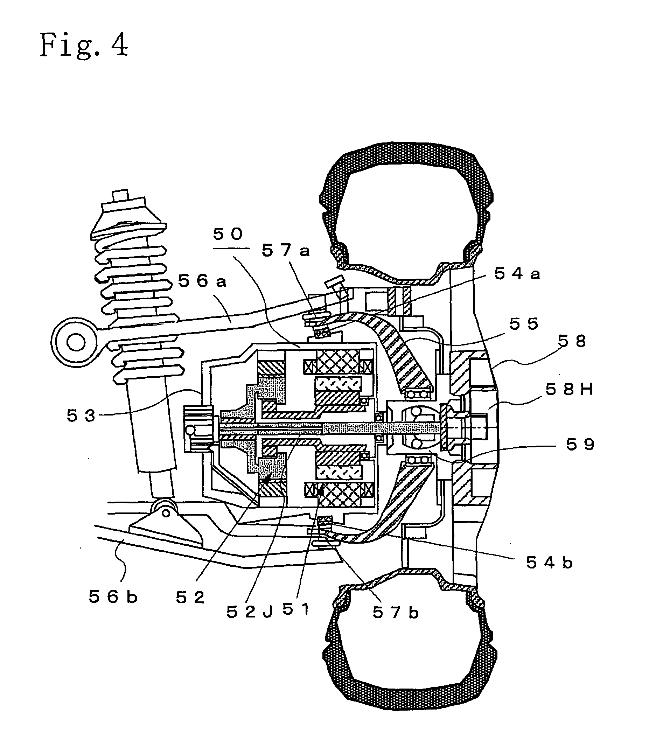

FIG. 4 illustrates one example of such an in-wheel motor system. A housing 53 of a geared motor 50, which is a combination of an electric motor 51 of an inner rotor type and a reduction gear mechanism 52, is held at the top and the bottom with dampers 54a and 54b made of rubber enclosing oil and connected to a knuckle 55, which is an unsprung part of the vehicle. The dampers 54a and 54b are further connected to ball joints 57a and 57b, which connect the knuckles 55 to an upper arm 56a and a lower arm 56b respectively. Also, an output shaft 52J of the reduction gear mechanism 52 and a wheel hub 58H mounted on a wheel 58 are connected to each other by a constant-velocity joint 59. Thus, the geared motor 50 is floating-mounted to the unsprung part of the vehicle, and the output of the electric motor 51 is transmitted to the wheel 58.
Reference 1: Japanese Unexamined Patent Application Publication No. 2005-178684
Reference2: Japanese Unexamined Patent Application Publication No. 2005-126037

### DISCLOSURE OF THE INVENTION

### PROBLEMS TO BE SOLVED BY THE INVENTION

It is to be noted that, in an in-wheel motor system with a motor mounted to an unsprung member of a vehicle through a dynamic vibration absorber, the performance of the dynamic vibration absorber is heavily dependant on the stroke width of the motor and the reduction gear mechanism, which serve as the mass of the dynamic damper.
However, as with the case of the above-described example of conventional art, the motor is supported from above and below with elastic bodies, such as the dampers 54a and 54b, as a dynamic vibration absorber. In such a structure, it is difficult not only to achieve sufficient stability but also to provide an ample stroke width for the motor because the electric motor 51, which is larger in diameter than the reduction gear mechanism 52, is disposed anterior to the reduction gear mechanism 52 closer to the wheel 58. Therefore, the dynamic vibration absorber cannot perform its expected function fully.

The present invention has been made in view of these conventional problems, and an object thereof is to provide an in-wheel motor system that not only allows the motor to have an ample stroke width but also has the dynamic vibration absorber perform its function fully.

### MEANS FOR SOLVING THE PROBLEM

According to a first aspect of the present invention, there is provided an in-wheel motor system comprising a geared motor, which includes an electric motor and a reduction gear mechanism connected to an output shaft of the motor for reducing the rotation speed thereof and transmitting the reduced speed to a wheel, and a dynamic vibration absorber serving as a medium through which the geared motor is mounted to an unsprung portion of a vehicle, whereby te mass of the motor is used as a mass of the dynamic vibration absorber, wherein the motor and the dynamic vibration absorber are disposed posterior to the reduction gear mechanism.
According to a second aspect of the present invention, there is provided an in-wheel motor system, wherein the reduction gear mechanism and the wheel are interconnected by a flexible coupling.
According to a third aspect of the present invention, there is provided an in-wheel motor system, wherein the dynamic vibration absorber comprises a motor mounting member attached to a lateral side of a motor case supporting the stator side of the motor, a knuckle mounting member attached to a knuckle connected to a wheel portion, a spring member interconnecting the motor mounting member and the knuckle mounting member, a damper, and guide members for guiding the operative direction of the spring member and the damper.

### EFFECT OF THE INVENTION

According to the present invention, an in-wheel motor system is constituted by mounting a geared motor to an unsprung portion of a vehicle through the medium of a dynamic vibration absorber such that the mass of the geared motor serves as the mass of the dynamic vibration absorber. And, in the in-wheel motor system, an electric motor larger in diameter than a reduction gear mechanism, which reduces the rotation speed of the electric motor and transmits the reduced speed to a wheel, and the dynamic vibration absorber are disposed posterior to the reduction gear mechanism. As a result, the geared motor is provided with an ample stroke width, and also the dynamic vibration absorber can perform its expected function fully.
Also, the reduction gear mechanism may be coupled to the wheel through a flexible coupling, so that the torque can be reliably transmitted to the wheel irrespective of the shaking of the geared motor.
Also, the geared motor may be mounted to the unsprung portion of a vehicle through the medium of a dynamic vibration absorber which comprises a motor mounting member attached to a lateral side of a motor case supporting the stator side of the motor, a knuckle mounting member attached to a knuckle connected to a wheel portion, a spring member interconnecting the motor mounting member and the knuckle mounting member, a damper, and guide members for guiding the operative direction of the spring member and the damper. Then the stroke width for the geared motor can be further extended, and the constitution is such that the mass of the motor acts consistently as the mass of the dynamic damper.

### BRIEF DESCRIPTION OF THE DRAWINGS

FIG. 1 is a vertical sectional view showing a structure of an in-wheel motor system adjoining a wheel according to a preferred embodiment of the present invention.
FIG. 2 is a front view showing a structure of an in-wheel motor system according to a preferred embodiment of the present invention.
FIG. 3 is an illustration showing another structure of an in-wheel motor system according to the present invention.
FIG. 4 is an illustration showing a structure of a conventional in-wheel motor system.

### REFERENCE NUMERALS

- 1: tire
- 2: wheel
- 2a: rim
- 2b: wheel disk
- 3: wheel hub
- 3k: rotary shaft of hub
- 4: strut
- 4a: coil spring
- 4b: shock absorber
- 5: knuckle
- 5j: bearing
- 6: braking mechanism
- 6a: brake rotor
- 6b: brake caliper
- 7: upper arm
- 8: lower arm
- 10G: geared motor
- 10: electric motor
- 10S: stator
- 10R: rotor
- 10a: motor case
- 10b: output shaft
- 10j: bearing
- 11: reduction gear mechanism
- 12: flexible coupling
- 20: dynamic vibration absorber
- 21: motor mounting member
- 22: knuckle mounting member
- 23: spring member
- 24: guide member
- 24a: cylinder
- 24b: guide shaft
- 25: damper
- 25a: cylinder
- 25b: rod

### BEST MODE FOR CARRYING OUT THE INVENTION

Preferred embodiments of the present invention will be described hereinbelow with reference to the accompanying drawings.

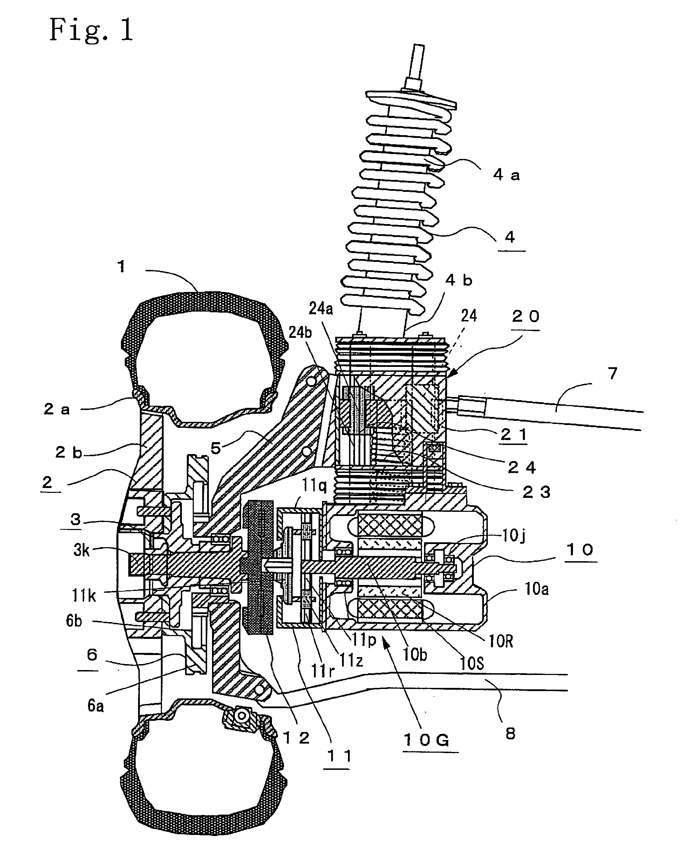

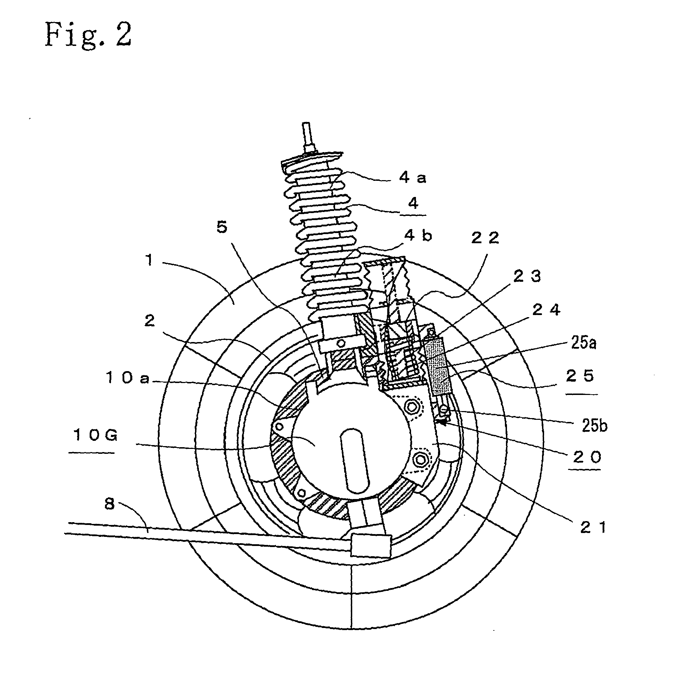

FIG. 1 and FIG. 2 are illustrations showing a structure of an in-wheel motor system according to a preferred embodiment of the present invention. In each of the figures, reference numeral 1 denotes a tire, 2 a wheel composed of a rim 2a and a wheel disk 2b, 3 a wheel hub connected to the wheel 2 at the rotary shaft thereof, 4 a strut having a coil spring 4a and a shock absorber 4b and suspending a knuckle 5 connected thereto through the wheel hub 3 and a bearing from a vehicle body, 6 a braking mechanism having a brake rotor 6a fitted on the wheel hub 3 and a brake caliper 6b mounted to the knuckle 5, 7 an upper arm connected to the strut 4, and 8 a lower arm supporting the knuckle 5 from below. Reference numeral 10G denotes a geared motor including an electric motor 10 of an inner rotor type, which has a motor case 10a supporting the stator 10S side thereof, an output shaft 10b rotatably mounted on the motor case 10a by bearing 10j, and a rotor 10R mounted on the output shaft 10b, and a reduction gear mechanism 11 connected to the output shaft 10b of the electric motor 10 for reducing the rotation speed of the motor 10 and transmitting the reduced speed to the wheel 2, and 12 denotes a flexible coupling connecting the reduction gear mechanism 11 to the rotary shaft 3k of the wheel hub 3. And reference numeral 20 denotes a dynamic vibration absorber which comprises a motor mounting member 21 attached to a lateral side of the motor case 10a, a knuckle mounting member 22 attached to the knuckle 5, a spring member 23 consisting in a coil spring connecting the motor mounting member 21 to the knuckle mounting member 22, and two guide members 24,24 each consisting of a cylinder 24a and a guide shaft 24b and guiding the operation of the spring member 23 in the up-and-down direction, and a damper 25 having a cylinder 25a, a not-shown piston, and a rod 25b connected to the piston, all disposed in parallel with the guide members 24,24. In this embodiment, one lateral side of the motor case 10a and the upper side of the knuckle 5 are connected to each other through the dynamic vibration absorber 20, so that the mass of the geared motor 10G acts as the mass of the dynamic damper. At the same time, the geared motor 10G is connected to the rotary shaft 3k of the wheel hub 3 by the flexible coupling 12, so that the torque can be transmitted to the wheel 2 irrespective of the shaking of the geared motor 10G.

In this embodiment, the reduction gear mechanism 11 includes a sun gear 11p connected to an output shaft 10b of the electric motor 10, a ring gear 11r attached to the sun gear 11p and the inner surface of a gear housing 11q, planetary gears 11z revolving around the shaft of the sun gear 11p through the space between the sun gear 11p and the ring gear 11r, and a carrier 11k connected to the planetary gears 11z. The reduction gear mechanism 11 is therefore a planetary gear mechanism for reducing the rotation speed of the sun gear 11p to a rotation speed which corresponds to the period of revolution of the planetary gears 11z. And the carrier 11k is coupled to the rotary shaft 3k of the wheel hub 3 by a spline coupling or a serration coupling, and thus the rotation of the electric motor 10 is transmitted to the wheel 2.
A planetary gear mechanism as described above is also used in a conventional in-wheel motor system as shown in FIG. 4 because it has a smaller diameter of the gear housing 11q than that of a parallel-shaft reduction gear mechanism, its gear shaft is coaxial with the motor shaft, and it is generally smaller in diameter than the motor case 10a.
Therefore, when a geared motor in which the diameter of the reduction gear mechanism (diameter of the gear housing) is smaller than that of the electric motor (diameter of the motor case) is to be used, it is preferable, as in the present embodiment, that the electric motor and the dynamic vibration absorber 20 are disposed posterior to the reduction gear mechanism 11 farther from the wheel. As such, an ample stroke width can be provided for the geared motor 10G, so that the dynamic vibration absorber can perform its expected function fully.

As described above, according to the preferred embodiment of the present invention, a geared motor 10G, which is provided with an electric motor 10 and a reduction gear mechanism 11 for reducing the rotation speed thereof and transmitting the reduced speed to the wheel 2, is elastically connected to a knuckle 5 by a dynamic vibration absorber 20 which comprises a motor mounting member 21 attached to a lateral side of the motor case 10a, a knuckle mounting member 22 attached to the knuckle 5, a spring member 23 interconnecting the motor mounting member 21 and the knuckle mounting member 22, and two guide members 24,24 for guiding the operation of the spring member 23 in the up-and-down direction, and a damper 25 disposed in parallel with the guide members 24,24. Also, the electric motor 10 and the dynamic vibration absorber 20 are disposed posterior to the reduction gear mechanism 11, so that the geared motor 10G is provided with an ample stroke width. Accordingly, the dynamic vibration absorber can perform its expected function fully, thereby improving the riding comfort and road holding properties of the vehicle.
Furthermore, the geared motor 10G and the wheel 2 are connected to each other by the flexible coupling 12, so that the torque can be reliably transmitted to the wheel 2 irrespective of the shaking of the geared motor 10G.

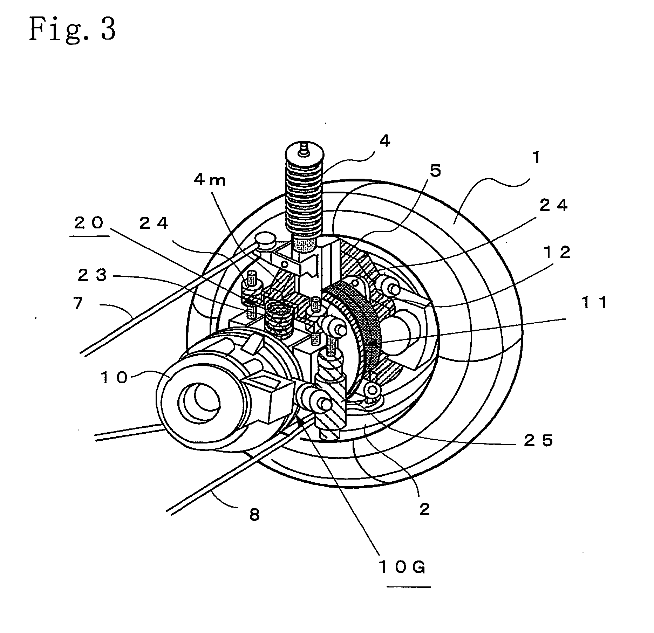

In the preferred embodiment of the present invention as described hereinabove, the geared motor 10G is connected to the knuckle 5, which is an unsprung member of a vehicle, by the dynamic vibration absorber 20, which is provided with the spring member 23, the damper 25, and the guide members 24,24 for guiding the operative direction of the spring member 23 and the damper 25, and at the same time, the dynamic vibration absorber 20 is disposed by a lateral side of the motor case 10a. However, as shown in FIG. 3, the arrangement may also be such that the geared motor 10G is elastically supported from above by providing a vibration absorber mounting member 4m on a lower part of the strut 4 suspending the knuckle 5 and coupling the vibration absorber mounting member 4m with the motor case 10a through the spring member 23, the damper 25, and the guide members 24,24 for guiding the operative direction of the spring member 23 and the damper 25.
Moreover, the application of the present invention is not limited to vehicles having strut-type suspensions, but is also applicable to vehicles having suspensions of other structures.

### INDUSTRIAL APLICABILITY

As discussed herein, according to the present invention, the electric motor and the reduction gear mechanism can be provided with an ample stroke width and the dynamic vibration absorber can perform its expected function fully, so that the riding comfort and road holding properties of a vehicle can be improved.

## Claims

1. An in-wheel motor system comprising:
a geared motor, the geared motor including an electric motor and a reduction gear mechanism connected to an output shaft of the motor for reducing the rotation speed thereof and transmitting the reduced speed to a wheel; and
a dynamic vibration absorber serving as a medium through which the geared motor is mounted to an unsprung portion of a vehicle, whereby a mass of the motor is used as a mass of the dynamic vibration absorber;
wherein the motor and the dynamic vibration absorber are disposed posterior to the reduction gear mechanism.

2. The in-wheel motor system according to claim 1, wherein the reduction gear mechanism and the wheel are interconnected by a flexible coupling.

3. The in-wheel motor system according to claim 1 or claim 2,
wherein the dynamic vibration absorber comprises a motor mounting member attached to a lateral side of a motor case supporting the stator side of the motor, a knuckle mounting member attached to a knuckle connected to a wheel portion, a spring member for interconnecting the motor mounting member and the knuckle mounting member, a damper for interconnecting the motor mounting member and the knuckle mounting member, and guide members for interconnecting the motor mounting member and the knuckle mounting member and for guiding the operative direction of the spring member and the damper.
